# EUROPEAN PATENT SPECIFICATION

(11) **EP 3 402 036 B1**
(45) Date of publication and mention of the grant of the patent: **08.05.2024**
(21) Application number: 18171244.9
(22) Date of filing: 08.05.2018
(51) Int. Cl.: H02J 7/00, H02J 7/34, H01M 50/247

(54) **PORTABLE POWER SUPPLY**
TRAGBARE STROMVERSORGUNG
ALIMENTATION PORTABLE

(30) Priority: 08.05.2017 CN 201720500896 U
(43) Date of publication of application: 14.11.2018
(73) Proprietor: Techtronic Cordless GP, Anderson, SC 29621 (US)
(72) Inventor: LEE, Hei Man Raymond, Kwai Chung (HK); LI, Yong Min, Hou Jie Town, Dongguan City (CN)
(74) Representative: Novagraaf Group

(56) References cited:
- CN-A- 106 300 453
- CN-U- 202 602 352
- KR-A- 20130 113 662
- US-A1- 2015 171 632

## Description

### TECHNICAL FIELD

The present invention relates to a portable power supply comprising a mobile AC power supply for AC power tools and a charger for charging DC battery packs.

### BACKGROUND OF THE INVENTION

In many situations, for example on a construction jobsite which is not yet connected to the mains electricity supply, there is a need to provide electrical power to electrically operated equipment where mains electricity is not available. Accordingly, many construction workers rely on portable generators that can supply power to their power tools.

Typical portable generators, however, may be too heavy and/or may generate an insufficient amount of power. For example, a single worker may be required to transport a portable power supply around a construction site and possibly between levels of a building (e.g., via a ladder). As the power generation of a portable power supply increases, however, the weight also increases. Specifically, larger generating devices (e.g., engines/alternators) may be required to provide adequate power to the point of use.

To overcome the above drawback of limited mobility by the prior fuel driven generator, portable power supply runs on electricity is also available in this field. Such portable power supply is featured by having AC-to-DC converter and DC-to-AC inverter and charging function via providing a built-in charger for charging rechargeable battery unit used in DC power tools. Such power supply however is generally designed stop running when mains electricity supply is disconnected.

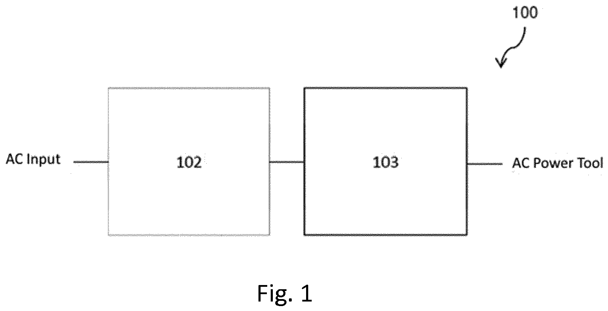

Fig. 1 illustrates a portable alternating current (AC) power supply 100 according to the prior art. Specifically, the portable AC power supply 100 includes an AC-to-direct current (DC) converter 102 and a DC-to-AC inverter 103. The AC-to-DC converter 102 provides DC power to the DC-to-AC inverter 103 for converting the DC power to an AC output voltage for supplying AC output to AC power tools. This prior power supply 100 may further include DC output ports (not shown) for receiving and charging rechargeable battery cells for use in DC power tools.

According to its abstract, US-A-2015/171632 describes a portable power source that includes a housing and a battery receptacle supported by the housing. The battery receptacle is configured to receive a battery. The portable power source also includes a first power tool battery pack port that is configured to receive a first power tool battery pack. The portable power source further includes a charging circuit coupled to the battery receptacle and the power tool battery pack, and an inverter. The charging circuit is configured to receive power from the battery receptacle and to provide power to the power tool battery pack port. The inverter includes a DC input coupled to the battery receptacle, inverter circuitry, and an AC output. The inverter circuitry is configured to receive power from the battery receptacle via the DC input, invert DC power received from the battery receptacle to AC power, and provide the AC power to the AC output. According to its abstract, CN-A-106300453 describes an electric automobile mobile charging power supply, which is characterized in that the electric automobile mobile charging power supply comprises an energy storage device, a low-voltage power supply device and a mobile loading device. The energy storage device comprises a battery system, a control unit, a charge/discharge unit and a man-machine interaction unit. A high-voltage port at one end of the charge/discharge unit is in high-voltage connection with a high-voltage port of the battery system, and a high-voltage port at the other end thereof is in high-voltage connection with a high-voltage port of an external device during working. The electric automobile mobile charging power supply can solve the problems that charging facilities for electric automobiles are not sufficient enough and the charging places are inflexible, and meets the charging requirements of the electric automobile very well.

According to its abstract, KR-A-2013/0113662 describes a portable power supply device to operate a load anywhere anytime by charging an internal battery in the process of converting various forms of energy into electric energy. The portable power supply comprises a power-generating part for generating direct current; a converting part (30) for converting external power into direct current for charging; an internal battery (40) for discharging the direct current to a load; an external current sensor for sensing the current consumption of the load; and a battery control part (50) for controlling the discharge of the internal battery.

According to its abstract, CN-U-202602352 describes a field-battle portable multifunctional emergency power supply based on a thin-film solar cell. The emergency power supply is composed of thin-film solar photovoltaic base fabric, a portable emergency power supply control box, an alternating current or 220V generator input end, an automobile engine input end, an input unit master switch and a normally-used direct current power supply output unit. According to the emergency power supply provided by the utility model, the power generated by the thin-film solar cell is adopted as main input, alternating current or the power generated by a generator or an automobile engine is adopted as auxiliary input; when sunlight irradiates a solar cell panel, a certain direct current or alternating current can be generated by a photovoltaic effect; a battery can be charged for storing power through a control system; after a variety of conversions, a normally-used direct current or alternating current power supply can be outputted such that weapon equipment, medical equipment, night lighting and network communication can keep good conditions under an emergency field-battle outage condition. The field-battle portable multifunctional emergency power supply can advantageously replace field power supplies such as traditional diesel generators or domestic wind power generators. The field-battle portable multifunctional emergency power supply which can fully utilize the solar photovoltaic cell to generate power is a novel multi-channel-input and multi-mode-output power supply.

### SUMMARY OF THE INVENTION

The present invention is defined by the appended independent claim 1.

Preferred embodiments of the present invention are defined by the appended dependent claims. In the above account, it is an object of the at least one embodiment to provide a power supply comprising an AC-to-DC converter and a power inverter for converting direct current (DC) into alternating current (AC), for providing AC power to AC driven electric power tool, no matter whether AC mains electricity is available or not to supply primary AC power to the power supply.

Other features and aspects will become apparent by consideration of the following detailed description and accompanying drawings.

### BRIEF DESCRIPTION OF THE DRAWINGS

Fig. 1 is a functional block diagram of a portable alternating current (AC) power supply according to the prior art.
Fig. 2a is a functional block diagram of a power supply assembly according to one implementation of the present invention.
Fig. 2b includes a perspective view of a power supply assembly and DC batteries for use in DC power tools according to the implementation of the present invention as illustrated in Fig. 2a.
Fig. 3a is a functional block diagram of a DC power supply according to one implementation of the present invention.
Fig. 3b includes a perspective view of a DC power supply and DC batteries for use in DC power tools according to the implementation of the present invention as illustrated in Fig. 3a.

### DETAILED DESCRIPTION OF THE INVENTION

Unless otherwise defined, all technical terms used herein have the same meaning as commonly understood by one skilled in the art to which the invention belongs.

As used herein, "comprising" means including the following elements but not excluding others. "Essentially consisting of" means that the material consists of the respective element along with usually and unavoidable impurities such as side products and components usually resulting from the respective preparation or method for obtaining the material such as traces of further components or solvents. "Consisting of" means that the material solely consists of, i.e. is formed by the respective element. As used herein, the forms "a," "an," and "the," are intended to include the singular and plural forms unless the context clearly indicates otherwise.

The present invention is directed to a portable power supply comprising a AC-to-DC converter coupled to a rechargeable battery unit and an inverter for converting the direct current (DC) output from the rechargeable battery unit into alternative current (AC). Specifically, the AC-to-DC converter converts AC power from the AC mains to DC power and the DC power supplies to the rechargeable battery unit for storing the DC power. The output terminal of the rechargeable battery unit is connected to the input terminal of the inverter, and thereby the DC power stored in the rechargeable battery is to be converted to a rated AC power.

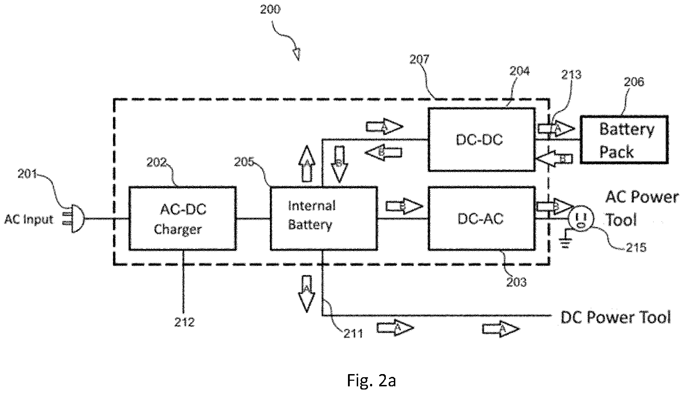

In Fig. 2a an exemplary portable power supply 200 according to the present invention is designated generally by the reference numeral 200. The portable power supply 200 operated on AC mains having a mains input 201 comprises an AC-to-DC converter 202 coupled between the mains input and a built-in rechargeable battery unit 205. The AC-to-DC converter 202 is a charger for charging the rechargeable battery unit 205 by converting the AC mains having 110 V_{ac}, 220 V_{ac} or 380 V_{ac} and 50/60 Hz to a first-voltage DC power to be stored in the battery unit 205. The battery unit 205 has a voltage within the range from 48 V_{dc} to 300 V_{dc}. Preferably the rechargeable battery unit 205 has a voltage of 48 V_{dc}, and more preferably 60 V_{dc}. The power supply 200 further comprises a DC-to-DC converter 204 and the rechargeable battery unit 205 couples to an input of the DC-to-DC converter 204. The DC-to-DC converter 204 operates as a charger for charging one or more battery packs 206 external to the power supply 200. The power supply assembly 200 still further includes a DC-to-AC power inverter 203 where its input couples to the built-in rechargeable battery unit 205. The power supply assembly 200 further includes a housing 207 to enclose the AC-to-DC converter 202, the DC-to-DC converter 204, the rechargeable battery unit 205 and the power inverter 203. Specifically, the power supply 200 may include a controller (not shown) which enables charging of the battery unit 205 when a charge level of the battery unit 205 is less than a threshold. Similarly, the controller may disable charging of the battery unit 205 when the charge level of the battery unit 205 is greater than a threshold to prevent overcharging.

The first-voltage DC power stored in the rechargeable battery unit 205 is within a range of 0.1 kwh to 10 kwh and to be converted to AC power of 230 V_{ac} or 110 V_{ac} at 50 Hz by the power inverter 203, which in turn is provided to an AC load such as a 2kW AC power tool or other devices running on AC power. Accordingly, the power supply 200 is designed to allow a user to have high AC power output from the power supply 200 while using battery unit 205 which has a safe voltage.

It is also an advantage for the present invention of the power supply 200 to provide continuous power to AC devices, or AC loads, when the primary AC power source, or mains, fails.

More specifically, the power supply 200 of the present invention further provides DC outlets/output ports and AC outlets for connecting and providing power to electric applications such as DC/AC electric tools and other electronic devices depending on the type of the power source required by the applications. The converters 202 and 204 work together (under command of the controller, not shown) to condition the supply provided to DC/AC loads via the DC/AC outlets. The controller receives various current and voltage measurements from different parts of the circuit, in order to perform its function. The skilled reader is familiar with these requirements and they will not be described further herein. The power supply 200 is configured via the controller to an operation mode suitable for the above-mentioned applications (i.e. providing power to DC/AC loads or charging battery packs 206).

The DC-to-DC converter 204 is a bi-directional dc-dc converter capable of transferring DC electrical energy in either direction (i.e. to or from the DC power pack 206) on power bus. Specifically, the power supply 200 is set in normal DC operation mode when no AC load being connected to the power supply is detected. In the normal DC operation mode, the power supply 200 provides forward parallel path for the charges flowing from the built-in battery unit 205 to the DC-to-DC converters 204 - DC power pack 206 branch and to the DC power tool branch, as illustrated in Fig. 2a path A. In this mode, the DC-to-DC converter 204 converts the first-voltage DC power from the rechargeable battery unit 205 to a second-voltage DC power to be stored in the DC power pack 206 external to the power supply 200. The second-voltage DC power is stored in the one or more DC power packs 206 having a voltage ranged from 12 V_{dc} to 60 V_{dc} and the one or more DC power packs 206 are suitable for use in battery driven or cordless DC power tools. In this mode, the battery unit 205 can also be a DC power source for powering up DC electric power tool when the DC electric power tool is connected to the DC outlet 211.

On the other hand, as shown in Fig. 2a path B when the AC power tool is connected to the AC outlet 215, the power supply 200 is automatically switched from normal DC operation mode to discharging mode allowing the AC output from the DC-to-AC power inverter 203 to power up AC electric power tool. In this discharging mode, the power supply 200 is configured to provide a reversed series path (thereby disable the forward path of charging the DC power pack 206 and driving the DC power tool) for current to leave the DC power pack 206 (if it is connected to the power supply 200) and the rechargeable battery unit 205 via the DC-to-DC converter 204 and the DC-to-AC power inverter 203 respectively, and thereby combines the currents to energize the AC electric power tool. The power supply 200 is configured to the discharging mode when the AC power tool is connected the power supply 200, or to the normal DC operation mode when the AC power tool is not connected to the power supply, regardless of the presence of the DC power tool connecting to the power supply. Therefore the AC electric power tool is prioritized to draw combined DC power of the first-voltage DC power from the rechargeable battery unit 205 and the second-voltage DC power from the DC power pack 206 to the DC-to-AC inverter 203 generating the AC output for powering up the AC power tool.

The controller is configured to control the operation mode as described above, based on detecting presence of the AC load, such that the converter 204 is selectively operable to generate and/or condition DC power at DC load ports or condition AC output at AC load port.

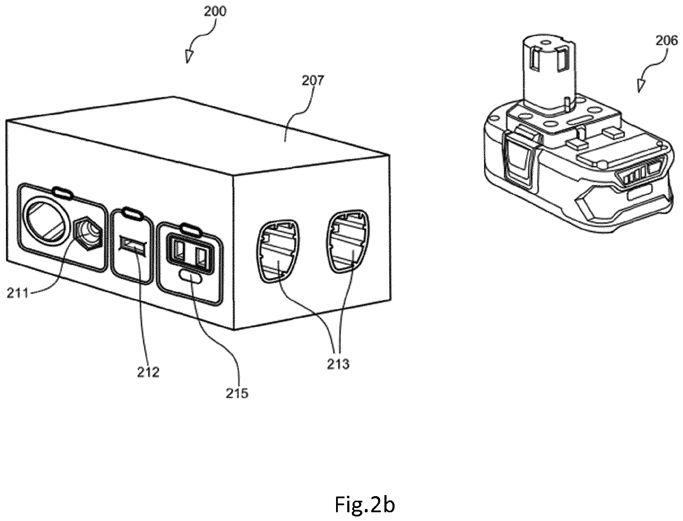

In another exemplary power supply 200 according to the present invention as shown in fig. 2b, the housing 207 of the power supply 200 includes a first DC outlet 211 for connecting to corded DC power tool and supplying the first-voltage DC power from the rechargeable battery unit 205 to the corded DC power tool. The DC power tool may be a sander, table saw, miter saw, jig saw, angle grinder, electric router, electric hammer, drill, etc. Of course other electric tools can also be used, but are not described in detail due to limit of the text.

In yet another exemplary power supply assembly 200, the housing 207 further includes a second DC outlet 212 such as USB port for connecting to other electric device and supplying the first-voltage DC power from the AC-to-DC converter 202 to the other electric device. The other electric device may include but not limited to the portable/handheld electronic devices, tablets, laptop, smartphone, etc.

In the power supply 200, the housing 207 further includes DC output port 213 for receiving and charging one or more rechargeable battery packs 206 by the second-voltage DC power from the DC-to-DC converter 204.

As illustrated in Fig. 2a and 2b, in an exemplary power supply 200 according to the present invention, the housing 207 includes the AC outlet 215 for connecting to AC power tool (not shown) and supplying AC output from the power inverter 203 to the corded AC power tool.

The rechargeable battery unit 205 may be hard-wiredly coupled between the AC-to-DC converter 202 and the power inverter 203 or the battery unit 205 may be removably connected to both the AC-to-DC converter 202 and the power inverter 203. Advantageously, if the battery unit 205 becomes exhausted and no longer keeps its charge, it can be readily replaced by a new one when the battery unit 205 is removably connected to the AC-to-DC converter 202 and the power inverter 203.

In a further aspect of the present invention, it provides a kit that includes the power supply assembly 200 and one or more DC power packs 206 which can be recharged by the power supply assembly 200. Preferably the DC power packs 206 are for use in the DC power tools. The DC power tool may be a sander, table saw, miter saw, jig saw, angle grinder, electric router, electric hammer, drill, etc. Of course other electric tools can also be used, but are not described in detail due to limit of the text. This kit provides power source to corded/cordless DC power tools or AC power tools.

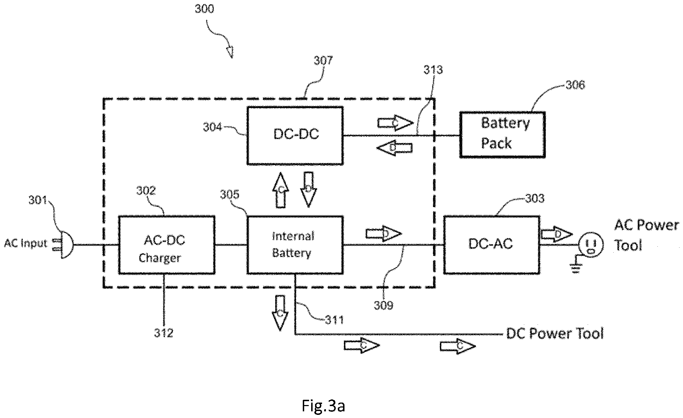

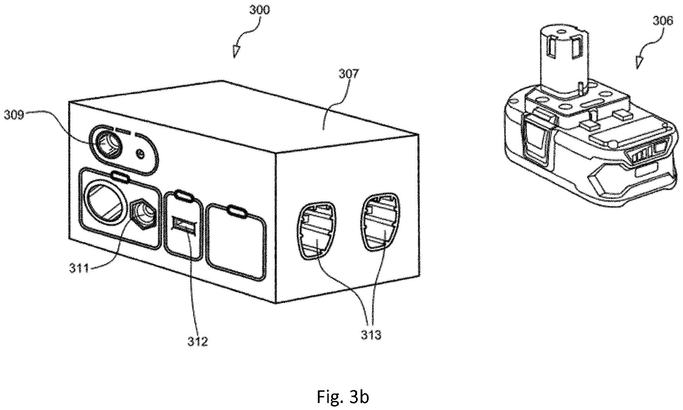

Figs. 3a and 3b illustrate a power supply 300 according to another embodiment of the invention. The portable power supply 300 is similar to the power supply 200; therefore, like components have been given like reference numbers plus 100 and only differences between the power supply 200 and 300 will be discussed in detail. In addition, components or features described with respect to only one or some of the embodiments described herein are equally applicable to any other embodiments described herein.

The portable DC power supply 300 operated on AC mains having a mains input 301 comprises an AC-to-DC converter 302 coupled between the mains input and a built-in rechargeable battery unit 305, both of which are enclosed within a housing 307. The DC power supply 300 receives power from the AC mains having 110 V_{ac}, 220 V_{ac} or 380 V_{ac} and 50/60 Hz and converts the AC power to DC power with voltage within the range from 48 V_{dc} to 300 V_{dc}, and thereby charges up the rechargeable battery unit 305. Preferably the rechargeable battery unit 305 has a voltage of 60 V_{dc}. The DC power supply 300 further comprises a DC-to-DC converter 304 and the rechargeable battery unit 305 couples to an input terminal of the DC-to-DC converter 304. Further DC power packs 306 external to the DC power supply 300 are also provided to be charged by the DC power supply 300 via the DC-to-DC converter 304. The DC power supply 300 still further includes a DC output terminal 309 disposed on the housing 307 for outputting the DC power stored in the battery unit 305. The DC output terminal 309 is connectable to a detachable DC-to-AC power inverter 303. The AC-to-DC converter 302 converts the mains to a first-voltage DC power having a voltage ranging from 48 V_{dc} to 300 V_{dc} for charging the battery unit 305. In this embodiment, the rechargeable battery unit 305 is of a capacity within a range of 0.1 kwh to 10 kwh. The battery unit 305 provides a DC source to the detachable DC-to-AC inverter 303 and the inverter 303 converts the DC source to AC output of 230 V_{ac}, or 110 V_{ac}, at 50 Hz which is suitable for operating a 2kW AC power tool or other device running on AC.

Accordingly, the DC power supply 300 is designed to allow a user to have a rated DC power suitable for charging the DC power packs 306 and to provide DC power source for powering up DC power tools or other devices running on DC.

Advantageously, the DC power supply 300 of present invention provides an uninterrupted DC power source for the detachable DC-to-AC inverter 303 when the DC power supply 300 is connected to the detachable DC-to-AC inverter 303 connected an AC load.

More specifically, the portable DC power supply of the present invention further provides DC outlets/output ports for connecting and providing power to DC electric applications and other electronic devices, and charging DC power packs depending on the amount of DC power required by the applications. The converters 302 and 304 work together (under command of the controller, not shown) to condition the supply provided to DC loads via the DC outlets/output ports. The controller receives various current and voltage measurements from different parts of the circuit, in order to perform its function. The skilled reader is familiar with these requirements and they will not be described further herein. The power supply 300 is configured via the controller to an operation mode suitable for the above-mentioned applications (i.e. providing power to DC loads or charging DC power packs 306).

In this embodiment, the DC-to-DC converter 304 is a bi-directional dc-dc converter capable of transferring DC power in either direction (i.e. to or from the DC power pack 306) on power bus. Specifically, the DC power supply assembly 300 is set in normal operation mode when no AC load driven from the detachable DC-to-AC inverter 303 or the power supply 300 being not connected to the detachable DC-to-AC inverter 303 at all is detected. In the normal operation mode, the DC power supply 300 provides a forward parallel path for the charges flowing from the built-in battery unit 305 to DC-to-DC converter 304 - DC power pack 306 branch and to DC power tool branch, as illustrated in Fig. 3a path C. In this mode, the DC-to-DC converter 304 converts the first-voltage DC power from the rechargeable battery unit 305 to a second-voltage DC power to be stored in the one or more DC power packs 306 external to the DC power supply 300. The second-voltage DC power is stored in the one or more DC power packs 306 having voltage ranged from 12 V_{dc} to 60 V_{dc} and the one or more DC power packs 306 are suitable for use in battery-driven cordless DC power tool. In this mode, the battery unit 305 can also be a DC power source for corded DC power tool when it is connected to the DC outlet 311.

On the other hand, as shown in Fig. 3a path D when the AC power tool is connected to the detachable DC-to-AC inverter 303 which is connected to the DC power supply 300 and an AC load is detected, the DC power supply 300 is automatically switched to from the normal DC mode to discharging mode allowing the AC output from the detachable DC-to-AC power inverter 303 to power up the AC electric power tool. In this discharging mode, the DC power supply 300 is configured to provide a reversed series path (thereby disable the forward path of charging the DC power pack 306 and driving the DC power tool) for current to leave the DC power pack 306 (if it is connected to the DC power supply 300) and the rechargeable battery unit 305 via the DC-to-DC converter 304 and the detachable DC-to-AC power inverter 303, and thereby energizes the AC power tool. Regardless of the presence of the DC power tool connecting to the DC power supply 300, the AC power tool is prioritized to draw combined DC power of the first-voltage DC power from the rechargeable battery unit 305 and the second-voltage DC power from the DC power pack 306 to the detachable DC-to-AC inverter 303 generating the AC output for powering up the AC power tool.

The controller is configured to control the operation mode as described above, based on detecting presence of the AC load, such that the converter 304 is selectively operable to generate and/or condition DC power at DC load ports or condition AC power at AC load port.

In another exemplary DC power supply 300 according to the present invention as shown in Fig. 3b, the housing 307 of the DC power supply 300 includes a first DC outlet 311 for connecting to corded DC power tool and supplying the first-voltage DC power from the rechargeable battery unit 305 to the corded DC power tool. The corded DC power tool may be a sander, table saw, miter saw, jig saw, angle grinder, electric router, electric hammer, drill, etc. Of course other electric tools can also be used, but are not described in detail due to limit of the text.

In yet another exemplary power supply assembly, the housing 307 further includes a second DC outlet 312 such as USB port for connecting to other electric tools and supplying the first-voltage DC power from the AC-to-DC converter 302 to the other electric tools. The other electric tools may include but not limited to the portable/handheld electronic devices, tablets, laptop, smartphone, etc.

In the power supply assembly, the housing 307 further includes a DC output port 313 for receiving and charging further rechargeable battery packs 306 by the second-voltage DC power via the DC-to-DC converter 304.

The rechargeable battery unit 305 may be hard-wiredly coupled between the AC-to-DC converter 302 and the DC output terminal 309 or the battery unit 305 may be removably connected to both the AC-to-DC converter 302 and the DC output terminal 309. Advantageously, if the battery unit 305 becomes exhausted and no longer keeps its charge, it can be readily replaced by a new one when the battery unit 305 is removably connected to the AC-to-DC converter 302 and the DC output terminal 309.

In a yet further aspect of the present invention, it provides a kit that includes the DC power supply 300 and one or more rechargeable battery packs 306, which can be recharged by the DC power supply 300. Preferably the rechargeable battery packs 306 are for use in the battery-driven cordless DC power tools. The DC battery-driven cordless power tool may be a sander, table saw, miter saw, jig saw, angle grinder, electric router, electric hammer, drill, etc. Of course other power tools can also be used, but are not described in detail due to limit of the text. This kit provides power source to cordless DC power tool.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

## Claims

1. A portable power supply (200, 300) configured to be operated on AC mains having a mains input (201, 301) comprises:
an AC-to-DC converter (202, 302) coupled between the mains input and a rechargeable battery unit (205, 305), the AC-DC converter configured to convert the AC mains to a first-voltage DC power to be stored in the rechargeable battery unit;
a DC-to-DC converter (204, 304), wherein the rechargeable battery unit is configured to be coupled to an input of the DC-to-DC converter and the DC-to-DC converter is bi-directional;
a DC port (213, 313) coupled to the DC-to-DC converter for operatively connecting with a battery pack (206, 306) external to the portable power supply (200, 300); a power inverter (203, 303); and
a housing (207, 307) for housing the AC-to-DC converter, the rechargeable battery unit, the DC-to-DC converter and the DC port;
wherein the output terminal of the rechargeable battery unit is configured to connect with the power inverter having an AC outlet for supplying an AC output to an AC load; and
wherein the portable power supply is configured to be operable and switchable between a normal DC operation mode in which the DC-to-DC converter converts the first-voltage DC power to a second-voltage DC power for charging the battery pack, and a discharging mode in which the second-voltage DC power stored in the battery pack via the DC-to-DC converter and the first-voltage DC power stored in the rechargeable battery unit are released to an AC load via the power inverter; the portable power supply configured to automatically switch between the discharging mode and the normal DC operation mode when the AC load is connected and disconnected to the portable power supply via the power inverter (203, 303) respectively.

2. The portable power supply (200, 300) as claimed in claim 1, further comprising the power inverter configured to be detachably connected with the output terminal of the rechargeable battery unit (205, 305).

3. The portable power supply (200, 300) as claimed in any one of claims 1 to 2, further comprising a first DC outlet (211, 311) for supplying the first-voltage DC power from the rechargeable battery unit (205, 305) to a DC load.

4. The portable power supply (200, 300) as claimed in any preceding claim, further comprising a second DC outlet (212, 312) for supplying the first-voltage DC power from the AC-to-DC converter to an electric device.

5. The portable power supply (200) as claimed in any preceding claim, wherein the housing (207) is further configured to house the power inverter (203) and the AC outlet for supplying the AC output from the power inverter to the AC load.

6. The portable power supply (200, 300) as claimed in any preceding claim, wherein the first-voltage DC power is between 48V-300V, and the second voltage DC power is between 12V-60V.

7. A kit comprises a portable power supply (200, 300) as claimed in any one of claims 1-6 and one or more battery packs.

8. The kit as claimed in claim 7, wherein the one or more battery packs are arranged to be used in DC power tools.

## Patentansprüche

1. Tragbare Leistungszufuhr (200, 300), die konfiguriert ist, um auf einem Wechselstromnetz betrieben zu werden, das einen Netzeingang (201, 301) aufweist, die umfasst:
einen Wechselstrom-Gleichstrom-Wandler (202, 302), der zwischen dem Netzeingang und einer wiederaufladbaren Batterieeinheit (205, 305) gekoppelt ist, wobei der Wechselstrom-Gleichstrom-Wandler konfiguriert ist, um das Wechselstromnetz in eine Gleichstromleistung von erster Spannung, um in der wiederaufladbaren Batterieeinheit gespeichert zu werden, umzuwandeln;
einen Gleichstrom-Gleichstrom-Wandler (204, 304), wobei die wiederaufladbare Batterieeinheit konfiguriert ist, um mit einem Eingang des Gleichstrom-Gleichstrom-Wandlers gekoppelt zu werden, und der Gleichstrom-Gleichstrom-Wandler bidirektional ist;
einen Gleichstromanschluss (213, 313), der mit dem Gleichstrom-Gleichstrom-Wandler gekoppelt ist, zum betriebsfähigen Verbinden mit einem Batteriepack (206, 306) außerhalb der tragbaren Leistungszufuhr (200, 300); einen Wechselrichter (203, 303); und
ein Gehäuse (207, 307) zum Aufnehmen des Wechselstrom-Gleichstrom-Wandlers, der wiederaufladbaren Batterieeinheit, des Gleichstrom-Gleichstrom-Wandlers und des Gleichstromanschlusses;
wobei die Ausgangsklemme der wiederaufladbaren Batterieeinheit konfiguriert ist, um sich mit dem Wechselrichter zu verbinden, der einen Wechselstromauslass zum Zuführen eines Wechselstromausgangs an einer Wechselstromlast aufweist; und
wobei die tragbare Leistungszufuhr konfiguriert ist, um zwischen einem normalen Gleichstrombetriebsmodus, in dem der Gleichstrom-Gleichstrom-Wandler die Gleichstromleistung von erster Spannung in eine Gleichstromleistung von zweiter Spannung zum Laden des Batteriepacks umwandelt, und einem Entladungsmodus, in dem die Gleichstromleistung von zweiter Spannung, die in dem Batteriepack über den Gleichstrom-Gleichstrom-Wandler gespeichert ist, und die Gleichstromleistung von erster Spannung, die in der wiederaufladbaren Batterieeinheit gespeichert ist, an eine Wechselstromlast über den Wechselrichter freigegeben werden, betriebsfähig und umschaltbar ist; wobei die tragbare Leistungszufuhr konfiguriert ist, um automatisch zwischen dem Entlademodus und dem normalen Gleichstrombetriebsmodus umzuschalten, wenn die Wechselstromlast mit der tragbaren Leistungszufuhr über den Wechselrichter (203, 303) verbunden beziehungsweise getrennt wird.

2. Tragbare Leistungszufuhr (200, 300) nach Anspruch 1, ferner umfassend den Wechselrichter, der konfiguriert ist, um mit der Ausgangsklemme der wiederaufladbaren Batterieeinheit (205, 305) lösbar verbunden zu werden.

3. Tragbare Leistungszufuhr (200, 300) nach einem der Ansprüche 1 bis 2, ferner umfassend einen ersten Gleichstromauslass (211, 311) zum Zuführen der Gleichstromleistung von erster Spannung von der wiederaufladbaren Batterieeinheit (205, 305) an eine Gleichstromlast.

4. Tragbare Leistungszufuhr (200, 300) nach einem der vorstehenden Ansprüche, ferner umfassend einen zweiten Gleichstromauslass (212, 312) zum Zuführen der Gleichstromleistung von erster Spannung von dem Wechselstrom-Gleichstrom-Wandler an eine elektrische Vorrichtung.

5. Tragbare Leistungszufuhr (200) nach einem der vorstehenden Ansprüche, wobei das Gehäuse (207) ferner konfiguriert ist, um den Wechselrichter (203) und den Wechselstromauslass zum Zuführen des Wechselstromausgangs von dem Wechselrichter an die Wechselstromlast aufzunehmen.

6. Tragbare Leistungszufuhr (200, 300) nach einem der vorstehenden Ansprüche, wobei die Gleichstromleistung von erster Spannung zwischen 48 V bis 300 V liegt und die Gleichstromleistung von zweiter Spannung zwischen 12 V bis 60 V liegt.

7. Kit, das eine tragbare Leistungszufuhr (200, 300) nach einem der Ansprüche 1 bis 6 und einen oder mehrere Batteriepacks umfasst.

8. Kit nach Anspruch 7, wobei der eine oder die mehreren Batteriepacks angeordnet sind, um in Gleichstromleistungswerkzeugen verwendet zu werden.

## Revendications

1. Alimentation en puissance portative (200, 300) conçue pour être mise en fonctionnement sur un secteur CA ayant une entrée secteur (201, 301) comprend :
un convertisseur CA-CC (202, 302) couplé entre l'entrée secteur et une unité batterie rechargeable (205, 305), le convertisseur CA-CC étant conçu pour convertir le secteur CA en une puissance CC de première tension à stocker dans l'unité batterie rechargeable ;
un convertisseur CC-CC (204, 304), dans laquelle l'unité batterie rechargeable est conçue pour être couplée à une entrée du convertisseur CC-CC et le convertisseur CC-CC est bi-directionnel ;
un port CC (213, 313) couplé au convertisseur CC-CC pour se connecter fonctionnellement à un bloc-batterie (206, 306) externe à l'alimentation en puissance portative (200, 300) ; un onduleur de puissance (203, 303) ; et
un logement (207, 307) pour loger le convertisseur CA-CC, l'unité batterie rechargeable, le convertisseur CC-CC et le port CC ;
dans laquelle la borne de sortie de l'unité batterie rechargeable est conçue pour se connecter à l'onduleur de puissance ayant une sortie CA pour fournir une sortie CA à une charge CA ; et
dans laquelle l'alimentation en puissance portative est conçue pour être fonctionnelle et commutable entre un mode de fonctionnement CC normal dans lequel le convertisseur CC-CC convertit la puissance CC de première tension en une puissance CC de seconde tension pour charger le bloc-batterie, et un mode de décharge dans lequel la puissance CC de seconde tension stockée dans le bloc-batterie par l'intermédiaire du convertisseur CC-CC et la puissance CC de première tension stockée dans l'unité batterie rechargeable sont relâchées à une charge CA par l'intermédiaire de l'onduleur de puissance ; l'alimentation en puissance portative étant conçue pour commuter automatiquement entre le mode de décharge et le mode de fonctionnement CC normal lorsque la charge CA est connectée et déconnectée à l'alimentation en puissance portative par l'intermédiaire de l'onduleur de puissance (203, 303) respectivement.

2. Alimentation en puissance portative (200, 300) selon la revendication 1, comprenant en outre l'onduleur de puissance conçu pour être connecté de manière détachable à la borne de sortie de l'unité batterie rechargeable (205, 305).

3. Alimentation en puissance portative (200, 300) selon l'une quelconque des revendications 1 à 2, comprenant en outre une première sortie CC (211, 311) pour fournir la puissance CC de première tension à partir de l'unité batterie rechargeable (205, 305) à une charge CC.

4. Alimentation en puissance portative (200, 300) selon une quelconque revendication précédente, comprenant en outre une seconde sortie CC (212, 312) pour fournir la puissance CC de première tension du convertisseur CA-CC à un dispositif électrique.

5. Alimentation en puissance portative (200) selon une quelconque revendication précédente, dans laquelle le logement (207) est en outre conçu pour loger l'onduleur de puissance (203) et la sortie CA pour fournir la sortie CA de l'onduleur de puissance à la charge CA.

6. Alimentation en puissance portative (200, 300) selon une quelconque revendication précédente, dans laquelle la puissance CC de première tension est comprise entre 48 V et 300 V et la puissance CC de seconde tension est comprise entre 12 V et 60 V.

7. Kit comprenant une alimentation en puissance portative (200, 300) selon l'une quelconque des revendications 1 à 6 et un ou plusieurs blocs-batteries.

8. Kit selon la revendication 7, dans lequel les un ou plusieurs blocs-batteries sont agencés pour être utilisés dans des outils de puissance CC.
